# FASCICULE DE BREVET EUROPEEN

(11) **EP 1 468 909 B1**
(45) Date de publication et mention de la délivrance du brevet: **21.06.2006**
(21) Numéro de dépôt: 04076006.8
(22) Date de dépôt: 07.04.2004
(51) Int. Cl.: B64C 27/615, B64C 3/50, B64C 9/30

(54) **Volet rotatif et élément sustentateur muni d'un tel volet**
Rotorblatt und Auftriebseinrichtung mit einem solchen Rotorblatt
Rotor blade and lift device with such a rotor blade

(30) Priorité: 14.04.2003 FR 0304635
(43) Date de publication de la demande: 20.10.2004
(73) Titulaire: EUROCOPTER, 13725 Marignane Cédex (FR)
(72) Inventeur: Arnaud, Gilles Louis, 13009 Marseille (FR)
(74) Mandataire: Renaud-Goud, Thierry

(56) Documents cités:
- GB-A- 734 446
- US-A- 5 320 491
- STRAUB F K ET AL: "DESIGN OF A SERVO-FLAP ROTOR FOR REDUCED CONTROL LOADS" SMART MATERIALS AND STRUCTURES, IOP PUBLISHING LTD., BRISTOL, GB, vol. 5, no. 1, 1 février 1996 (1996-02-01), pages 68-75, XP000553229 ISSN: 0964-1726

## Description

La présente invention concerne un volet rotatif, ainsi qu'un élément sustentateur muni d'au moins un tel volet rotatif.

Plus particulièrement, bien que non exclusivement, ledit élément sustentateur, au bord de fuite duquel est monté le volet, est une pale d'un rotor d'hélicoptère, en particulier une pale du rotor principal d'avance et de sustentation de l'hélicoptère. Il peut toutefois également s'agir d'une pale d'un giravion ou d'un aéronef convertible ou bien d'un élément sustentateur d'un avion, tel qu'une aile ou un stabilisateur horizontal par exemple.

On sait que le volet de bord de fuite d'une pale de rotor d'hélicoptère est piloté en incidence, en étant braqué par l'intermédiaire de moyens d'actionnement qui :
- soit comprennent au moins un actionneur usuel, par exemple de type électromagnétique ;
- soit sont réalisés à partir de matériaux dits "intelligents" du type piézo-électrique, magnétostrictif ou à mémoire de forme.

En pratique, il s'avère que, sur une telle pale dite "active", des limitations excessives de braquage du volet interviennent systématiquement, ce qui réduit bien entendu les performances de la pale. Ces limitations sont notamment dues au niveau élevé du moment de charnière ("hinge moment" en anglais) du volet, c'est-à-dire du moment qu'il est nécessaire de vaincre pour manoeuvrer le volet autour de son axe de rotation. Ainsi, par exemple, des moyens d'actionnement à base de matériau piézo-électrique présentent des caractéristiques d'énergie et de masse qui sont insuffisantes pour vaincre la totalité du moment de charnière et piloter le volet aux fréquences généralement requises lors d'un vol,
pour contrôler efficacement les vibrations ou diminuer de manière importante le niveau sonore de l'aéronef. De même, pour vaincre le moment de charnière, les moyens d'actionnement usuels nécessitent des pièces relativement lourdes et volumineuses, qu'il est souvent difficile de loger dans la pale.

Le document « Design of a servo-flap for reduced control loads » indique qu'il est possible de réduire le moment de charnière d'un volet en disposent son axe de rotation à une distance du bord d'attaque du volet, équivalente à 25% de la corde du volet. Bien qu'efficace, l'usage montre que cette mesure est insuffisante.

Par conséquent, les moyens d'actionnement connus ne permettent pas un braquage optimal (notamment en terme de performance) du volet, en raison en particulier de l'existence d'un moment de charnière bien trop élevé.

La présente invention a pour objet de remédier à ces inconvénients, en proposant un volet rotatif, dont le moment de charnière est minimisé.

A cet effet, selon l'invention, ledit volet rotatif qui est susceptible de tourner autour d'un axe de rotation longitudinal défini selon la première envergure dudit volet, ledit volet présentant un profil qui s'étend selon la corde et comprend un premier bord d'attaque, un premier bord de fuite, un intrados et un extrados, est remarquable en ce que :
- ledit intrados et ledit extrados présentent, au-delà de 25% de la corde du volet, des formes non concaves ;
- ledit premier bord d'attaque présente une forme arrondie pourvue d'un rayon de courbure sensiblement constant ou, à défaut, une forme elliptique dont le premier quotient du grand axe par le petit axe est inférieur ou égal à 1,5 ;
- ledit premier bord de fuite présente un angle principal qui est compris entre 10° et 30° ; et
- ledit axe de rotation est situé à une première distance dudit premier bord d'attaque, qui est comprise entre 15% et 35% de la corde dudit volet.

Ainsi, grâce aux caractéristiques (notamment géométriques) précitées, le volet conforme à l'invention présente un moment de charnière très réduit lorsqu'il est monté sur un élément sustentateur, sans pour autant perdre en efficacité. Il en découle un gain en énergie pour actionner (faire tourner) le volet et donc, en particulier, également un gain de masse.

Par conséquent, on peut utiliser les moyens d'actionnement connus et précités pour actionner de façon optimale ledit volet, ce qui permet de remédier aux inconvénients rappelés précédemment.

Dans le cadre de la présente invention, ledit intrados et ledit extrados peuvent présenter, comme formes non concaves, soit des formes sensiblement linéaires, soit des formes convexes.

En outre, avantageusement, ledit premier bord de fuite présente une forme elliptique, dont le deuxième quotient du grand axe par le petit axe est supérieur ou égal à 1,5 et est, de préférence, sensiblement égal à 2. En effet, idéalement, le premier bord de fuite doit être biseauté, mais la réalisation industrielle d'un biseau parfait est impossible, car un très léger arrondi du premier bord de fuite est nécessaire pour éviter la rupture des fibres composites qui ferment ce premier bord de fuite. Inversement, un rayon de courbure trop important du premier bord de fuite doit être évité, afin de fixer le point de confluence des filets d'air extrados et intrados et d'éviter ainsi le contournement du premier bord de fuite par les filets d'air, ce qui serait préjudiciable à l'efficacité aérodynamique du volet.

Par ailleurs, dans un mode de réalisation préféré, ledit angle principal du premier bord de fuite vaut sensiblement 20° et/ou ledit axe de rotation du volet est situé à une première distance du premier bord d'attaque qui correspond sensiblement à 25,5% de la corde, afin de faire coïncider au mieux l'axe de charnière, le foyer aérodynamique et le centre de gravité dudit volet.

La présente invention concerne également un élément sustentateur, par exemple une pale de rotor d'hélicoptère ou une aile d'avion, pourvu d'un deuxième bord d'attaque ainsi que d'un deuxième bord de fuite et qui comprend de plus au moins un volet qui est monté de façon rotative au niveau du deuxième bord de fuite, en laissant un jeu entre ledit deuxième bord de fuite de l'élément sustentateur et le premier bord d'attaque du volet.

Selon l'invention, ledit élément sustentateur est remarquable en ce que ledit volet est du type de celui précité.

De façon avantageuse, ledit jeu entre le deuxième bord de fuite de l'élément sustentateur et le premier bord d'attaque du volet:
- est compris entre 1,5% et 3,5% de la corde du volet et correspond, de préférence, à 2% de ladite corde ; et/ou
- est compris entre 0,4% et 0,8% d'une longueur totale séparant ledit deuxième bord d'attaque dudit premier bord de fuite et correspond, de préférence, à 0,5% de cette longueur totale.

Avantageusement, le deuxième bord de fuite de l'élément sustentateur recouvre partiellement le premier bord d'attaque du volet. De plus, de façon avantageuse, ledit recouvrement partiel du premier bord d'attaque du volet par le deuxième bord de fuite de l'élément sustentateur est inférieur à 10% environ de la corde du volet. Ainsi, la plus grande partie du premier bord d'attaque du volet baigne dans l'écoulement fluide, ce qui a pour effet de recentrer le foyer aérodynamique du volet entre 15% et 35% environ, pour le confondre sensiblement avec l'axe de charnière. Il en découle une diminution du moment de charnière du volet.

Par ailleurs, pour éviter toute recirculation aérodynamique néfaste, l'élément sustentateur conforme à l'invention comporte, de plus, au moins un moyen de colmatage, de préférence déformable, pour obturer l'ouverture créée par ledit jeu. De plus, avantageusement, ledit moyen de colmatage est situé dans une surface de référence de l'élément sustentateur.

Dans un mode de réalisation particulier, ledit élément sustentateur comporte une pluralité de volets qui sont agencés selon la deuxième envergure dudit élément sustentateur. Cet agencement desdits volets est choisi de manière à éviter leur blocage suite aux déformations globales de l'élément sustentateur (par exemple une pale) au cours du vol. On préconise une succession de volets (élémentaires) dont la première envergure n'excède pas (à chaque fois) 15% de la deuxième envergure, et est comprise, de préférence, entre 7% et 10%.

Les figures du dessin annexé feront bien comprendre comment l'invention peut être réalisée. Sur ces figures, des références identiques désignent des éléments semblables.

La figure 1 montre schématiquement le profil d'un volet conforme à l'invention.

La figure 2 montre schématiquement un élément sustentateur muni d'un volet conforme à l'invention.

La figure 3 montre schématiquement le profil d'un volet conforme à l'invention, associé à un élément sustentateur représenté partiellement.

La figure 4 montre schématiquement un élément sustentateur muni d'une pluralité de volets conformes à l'invention.

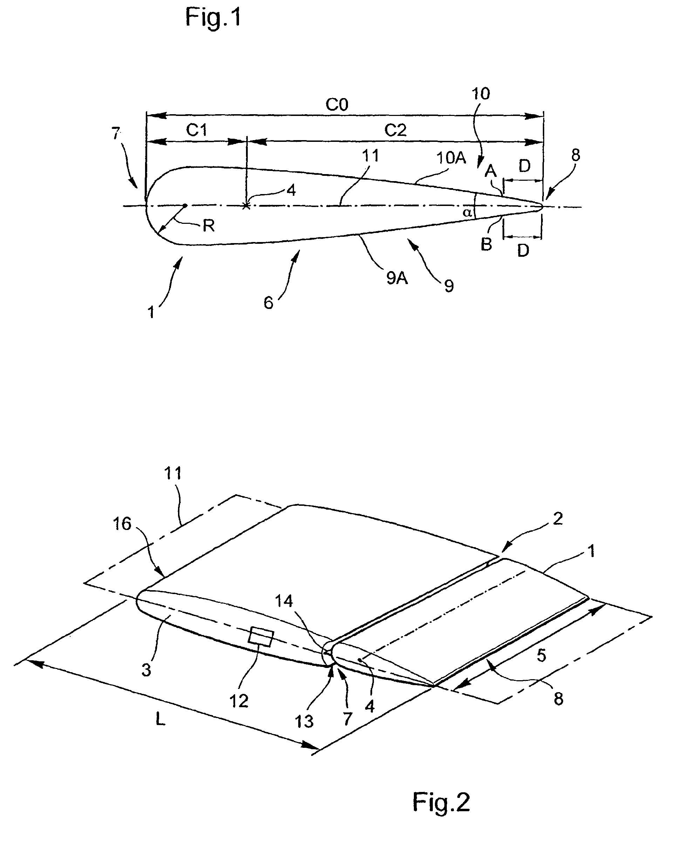

Un volet 1 conforme à l'invention et représenté schématiquement sur la figure 1 est susceptible d'être monté de façon rotative sur le deuxième bord de fuite 2 d'un élément sustentateur 3, comme représenté sur la figure 2. A cet effet, ledit volet 1 est susceptible de tourner autour d'un axe de rotation 4 (ou axe de charnière) qui est défini selon la première envergure 5 dudit volet 1 et donc également selon l'envergure de l'élément sustentateur 3 précisé ci-dessous.

Ledit volet 1 présente, de façon usuelle, un profil 6 (le contour de la section représentée sur la figure 1) qui s'étend selon la corde CO et comprend un premier bord d'attaque 7, un premier bord de fuite 8, un intrados 9 et un extrados 10.

Pour réduire le moment de charnière, c'est-à-dire le moment qu'il faut vaincre pour faire tourner le volet 1 autour de son axe de rotation 4, ledit volet 1 présente, selon l'invention, les caractéristiques combinées suivantes :
a) ledit intrados 9 et ledit extrados 10 présentent, au-delà de 25% de la corde CO du volet 1, des formes non concaves. Dans le mode de réalisation représenté sur la figure 1, ils présentent plus précisément des formes 9A et 10A sensiblement linéaires. Ils peuvent toutefois également présenter des formes convexes ;
b) ledit premier bord d'attaque 7 présente, de préférence, une forme arrondie pourvue d'un rayon de courbure R sensiblement constant ou, à défaut, une forme elliptique dont le premier quotient du grand axe par le petit axe est inférieur ou égal à 1,5 ;
c) ledit premier bord de fuite 8 présente un angle principal α, séparant deux droites respectivement tangentes à l'extrados 10 et à l'intrados 9 du volet 1 en deux points A,B situés respectivement sur l'extrados 10 et l'intrados 9 à une deuxième distance D du premier bord de fuite 8 sensiblement égale à 10% de la corde CO, qui est compris entre 10° et 30° et qui est de préférence proche de 20° ; et
d) ledit axe de rotation 4 est situé à une première distance C1 du premier bord d'attaque 7 qui est comprise entre 15% et 35% de la corde CO dudit volet 1.

On notera que :
- la caractéristique d) précitée entraîne un moment aérodynamique minimal, ledit moment aérodynamique représentant la part prépondérante du moment de charnière global qu'il faut vaincre pour manoeuvrer le volet 1, tant que les fréquences d'excitation ne dépassent pas 30 Hz à 50 Hz environ ; et
- les caractéristiques a) à c) concernent des formes géométriques qui, en combinaison, participent à la réduction de la part aérodynamique du moment de charnière.

De plus, selon l'invention, ledit premier bord de fuite 8 présente une forme elliptique, dont le deuxième quotient du grand axe par le petit axe est supérieur à 1,5, et de préférence sensiblement égal à 2.

En outre, dans un mode de réalisation préféré, ledit axe de rotation 4 du volet 1 est situé à une première distance C1 du premier bord d'attaque 7 qui correspond sensiblement à 25,5% de la corde CO. Dans ce cas, on obtient sensiblement les rapports suivants, C2 étant l'espacement entre ledit axe de rotation 4 et le premier bord de fuite 8 du volet 1 :
- C1/CO = 0,255
- C1/C2 = 0,343
- C2/CO = 0,744.

Ainsi, grâce aux caractéristiques a) à d) précitées, le volet 1 conforme à l'invention présente un moment de charnière très réduit lorsqu'il est monté sur un élément sustentateur 3, sans pour autant trop perdre en efficacité. Il en découle un gain en énergie pour actionner (faire tourner) le volet 1 et un gain de masse. De ce fait, on peut utiliser des moyens d'actionnement usuels pour actionner de façon optimale ledit volet 1 conforme à l'invention.

Comme on peut le voir sur la figure 2, le volet 1 peut être monté sur un élément sustentateur 3 (par exemple une pale d'hélicoptère, ou bien une aile ou un stabilisateur d'avion) de manière à pouvoir être déplacé en rotation par l'intermédiaire de moyens d'actionnement 12 usuels représentés schématiquement. A titre d'exemple, ces moyens d'actionnement 12 peuvent être de type électromagnétique ou à base de matériaux dits "intelligents" du type piézo-électrique, magnétostrictif ou à mémoire de forme par exemple.

Le volet 1 est monté sur l'élément sustentateur 3 de manière à créer un jeu 13 entre le deuxième bord de fuite 2 de l'élément sustentateur 3 et le premier bord d'attaque 7 du volet 1, ce qui permet d'éviter un blocage mécanique lors d'un actionnement du volet 1, à cause, par exemple, de la déformation mécanique de l'élément sustentateur 3, du volet 1 ou de son actionneur sous les efforts centrifuges et aérodynamiques.

Selon l'invention, ledit jeu 13 :
- est compris entre 1,5% et 3,5% de la corde CO du volet 1 et correspond, de préférence, à 2% ; et/ou
- est compris entre 0,4% et 0,8% d'une longueur totale L séparant le deuxième bord d'attaque 16 du premier bord de fuite 8, de préférence, à 0,5% de cette longueur totale L.

De plus, selon l'invention, le volet 1 comporte des moyens de colmatage 14 usuels, du type joint d'étanchéité, pour obturer ledit jeu 13 (c'est-à-dire l'ouverture créée par le jeu 13) et ainsi éviter une recirculation aérodynamique néfaste, qui augmenterait sensiblement le moment de charnière et diminuerait l'efficacité sustentatrice du volet 1. Ces moyens de colmatage 14 peuvent être des bourrelets de caoutchouc fixés sur le premier bord d'attaque 7 du volet 1 ou des toiles fixées sur l'élément sustentateur 3 et le volet 1, de préférence dans une surface de référence 11 définie par l'ensemble des droites joignant le premier bord d'attaque 7 au premier bord de fuite 8 lorsque le volet 1 est en position neutre, c'est-à-dire lorsque les premier 7,8 et deuxième 16,2 bords d'attaque et de fuite sont sensiblement alignés.

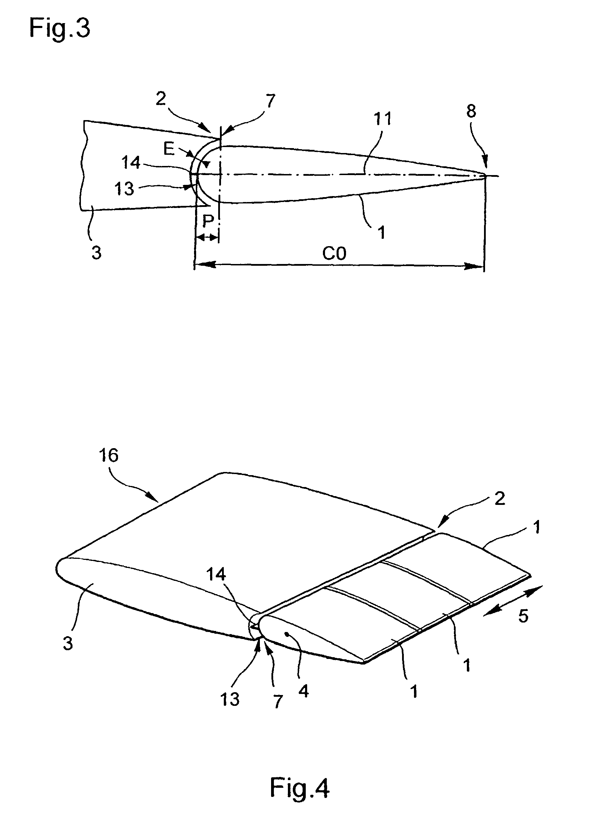

Dans un mode de réalisation particulier représenté sur la figure 3, le deuxième bord de fuite 2 de l'élément sustentateur 3 recouvre partiellement le premier bord d'attaque 7 du volet 1. De plus, ledit recouvrement partiel P du premier bord d'attaque 7 par le deuxième bord de fuite 2 est inférieur à 10% de la corde CO du volet 1. On a également mis en évidence sur cette figure 3 la largeur E du jeu 13 entre ledit deuxième bord de fuite 2 et ledit premier bord d'attaque 7.

Par ailleurs, dans un mode de réalisation particulier représenté sur la figure 4, l'élément sustentateur 3, dont on a uniquement représenté une partie ou tronçon sur cette figure 4, comporte une pluralité de volets 1 du type précité, qui sont agencés selon la deuxième envergure de l'élément sustentateur 3. De plus, la première envergure 5 de chacun desdits volets 1 est inférieure ou égale à 15% de la deuxième envergure et est comprise, de préférence, entre 7% et 10% de cette deuxième envergure.

Dans un mode de réalisation préféré, la présente invention est appliquée aux pales du rotor principal d'avance et de sustentation d'un hélicoptère, la partie d'élément sustentateur 3 illustrée sur la figure 2 (ou la figure 4) représentant dans ce cas un tronçon d'une pale.

La présente invention permet alors de maîtriser la trajectoire verticale de chaque pale sur chaque tour du rotor de l'hélicoptère, ainsi que la répartition locale de portance sur la pale et donc la génération des tourbillons de pale, de façon à minimiser l'interaction entre chaque pale et le tourbillon qui se produit dans le sillage d'extrémité des pales, phénomène qui est dénommé "BVI" pour "Blade Vortex Interaction" en anglais. Ceci permet de réduire le bruit, puisque l'impact du tourbillon marginal est à l'origine de variations locales de pression génératrices de bruit à caractère impulsif. Ceci permet de minimiser les composantes en (b-1)Ω, bΩ et (b+1)Ω des efforts sur la pale (b étant le nombre de pales et Ω le régime de rotation du rotor), ce qui a pour conséquence une forte réduction des niveaux vibratoires de l'hélicoptère et donc une amélioration sensible du confort en cabine.

Grâce à l'agencement de volets 1 conformes à l'invention sur les pales de l'hélicoptère, on est donc en mesure de créer des variations de vitesses verticales dites "vitesses induites" au niveau du bord de fuite de l'ensemble pale-volet de manière à modifier la trajectoire des tourbillons et à éviter autant que possible les interactions.

## Revendications

1. Volet rotatif susceptible de tourner autour d'un axe de rotation longitudinal (4) défini selon la première envergure (5) dudit volet (1), ledit volet (1) présentant un profil (6) qui s'étend selon la corde (CO) et comprend un premier bord d'attaque (7), un premier bord de fuite (8), un intrados (9) et un extrados (10),ledit axe de rotation (4) étant situé à une première distance (C1) dudit premier bord d'attaque (7), qui est comprise entre 15% et 35% de la corde (CO) dudit volet (1),
**caractérisé en ce que** :
- ledit intrados (9) et ledit extrados (10) présentent, au-delà de 25% de la corde (CO) du volet (1), des formes non concaves ;
- ledit premier bord de fuite (8) présente un angle principal (α) qui est compris entre 10° et 30°.

2. Volet selon la revendication 1,
**caractérisé en ce que** ledit premier bord d'attaque (7) présente une forme arrondie pourvue d'un rayon de courbure (R) sensiblement constant.

3. Volet selon la revendication 1,
**caractérisé en ce que** ledit premier bord d'attaque (7) présente une forme elliptique, dont le premier quotient du grand axe par le petit axe est inférieur ou égal à 1,5.

4. Volet selon l'une quelconque des revendications 1 à 3,
**caractérisé en ce que** ledit intrados (9) présente une forme sensiblement linéaire.

5. Volet selon l'une quelconque des revendications 1 à 3,
**caractérisé en ce que** ledit intrados (9) présente une forme sensiblement convexe.

6. Volet selon l'une quelconque des revendications 1 à 5,
**caractérisé en ce que** ledit extrados (10) présente une forme sensiblement linéaire.

7. Volet selon l'une quelconque des revendications 1 à 5,
**caractérisé en ce que** ledit extrados (10) présente une forme sensiblement convexe.

8. Volet selon l'une quelconque des revendications précédentes,
**caractérisé en ce que** ledit angle principal (α) vaut sensiblement 20°.

9. Volet selon l'une quelconque des revendications précédentes,
**caractérisé en ce que** ledit premier bord de fuite (8) présente une forme elliptique, dont le deuxième quotient du grand axe par le petit axe est supérieur ou égal à 1,5.

10. Volet selon la revendication 9,
**caractérisé en ce que** ledit deuxième quotient du grand axe par le petit axe est sensiblement égal à 2.

11. Volet selon l'une quelconque des revendications précédentes,
**caractérisé en ce que** ledit axe de rotation (4) du volet (1) est situé à une première distance (C1) du premier bord d'attaque (7) qui correspond sensiblement à 25,5% de la corde (CO).

12. Elément sustentateur (3) pourvu d'un deuxième bord d'attaque (16) ainsi que d'un deuxième bord de fuite (2), et comprenant de plus au moins un volet (1) qui est monté de façon rotative au niveau dudit deuxième bord de fuite (2), en laissant un jeu (13) entre ledit deuxième bord de fuite (2) et ledit premier bord d'attaque (7) du volet (1),
**caractérisé en ce que** ledit volet (1) est du type de celui spécifié sous l'une quelconque des revendications 1 à 11.

13. Elément sustentateur selon la revendication 12,
**caractérisé en ce que** ledit jeu (13) est compris entre 1,5% et 3,5% de ladite corde (CO) du volet (1).

14. Elément sustentateur selon la revendication 13,
**caractérisé en ce que** ledit jeu (13) correspond sensiblement à 2% de ladite corde (CO) du volet (1).

15. Elément sustentateur selon la revendication 12,
**caractérisé en ce que** ledit jeu (13) est compris entre 0,4% et 0,8% d'une longueur totale (L) séparant ledit deuxième bord d'attaque (16) dudit premier bord de fuite (8).

16. Elément sustentateur selon la revendication 15,
**caractérisé en ce que** ledit jeu (13) correspond sensiblement à 0,5% de ladite longueur totale (L).

17. Elément sustentateur selon l'une quelconque des revendications 12 à 16,
**caractérisé en ce qu'**il comporte un recouvrement partiel (P) dudit premier bord d'attaque (7) par ledit deuxième bord de fuite (2).

18. Elément sustentateur selon la revendication 17,
**caractérisé en ce que** ledit recouvrement partiel (P) est inférieur à 10% de ladite corde (CO) du volet (1).

19. Elément sustentateur selon l'une quelconque des revendications 12 à 18,
**caractérisé en ce qu'**il comporte au moins un moyen de colmatage (14) pour obturer l'ouverture créée par ledit jeu (13).

20. Elément sustentateur selon la revendication 19,
**caractérisé en ce que** ledit moyen de colmatage (14) est situé dans une surface de référence (11) de l'élément sustentateur (3).

21. Elément sustentateur selon l'une quelconque des revendications 12 à 20,
**caractérisé en ce qu'**il comprend une pluralité de volets (1) qui sont agencés selon la deuxième envergure dudit élément sustentateur (3), et **en ce que** ladite première envergure (5) de chacun desdits volets (1) est inférieure ou égale à 15% de ladite deuxième envergure.

22. Elément sustentateur selon la revendication 21,
**caractérisé en ce que** ladite première envergure (5) de chacun desdits volets (1) est comprise entre 7% et 10% de ladite deuxième envergure dudit élément sustentateur (3).

## Claims

1. A rotary flap capable of turning about a longitudinal axis (4) of rotation which is defined by the first span (5) of the said flap (1), the said flap (1) having a profile (6) which extends over the chord (CO) and comprises a first leading edge (7), a first trailing edge (8), a lower surface (9) and an upper surface (10), the said axis of rotation (4) being located at a first distance (C1) from the said first leading edge (7), which is between 15% and 35% of the chord (CO) of the said flap (1),
**characterised in that**:
- beyond a point 25% of the way along the chord (CO) of the flap (1), the said lower surface (9) and the said upper surface (10) have shapes that are not concave;
- the said first trailing edge (8) has a main angle (α) which is between 10° and 30°.

2. A flap according to Claim 1,
**characterised in that** the said first leading edge (7) has a rounded shape provided with a substantially constant radius (R) of curvature.

3. A flap according to Claim 1,
**characterised in that** the said first leading edge (7) has an elliptical shape whereof the first quotient of the major axis to the minor axis is less than or equal to 1.5.

4. A flap according to any one of Claims 1 to 3,
**characterised in that** the said lower surface (9) has a substantially linear shape.

5. A flap according to any one of Claims 1 to 3,
**characterised in that** the said lower surface (8) has a substantially convex shape.

6. A flap according to any one of Claims 1 to 5,
**characterised in that** the said upper surface (10) has a substantially linear shape.

7. A flap according to any one of Claims 1 to 5,
**characterised in that** the said upper surface (10) has a substantially convex shape.

8. A flap according to any one of the preceding claims,
**characterised in that** the said main angle (α) is substantially 20°.

9. A flap according to any one of the preceding claims,
**characterised in that** the said first trailing edge (8) has an elliptical shape whereof the second quotient of the major axis to the minor axis is greater than or equal to 1.5.

10. A flap according to Claim 9,
**characterised in that** the said second quotient of the major axis to the minor axis is substantially equal to 2.

11. A flap according to any one of the preceding claims,
**characterised in that** the said axis of rotation (4) of the flap (1) is located at a first distance (C1) from the first leading edge (7), which corresponds substantially to 25.5% of the chord (CO).

12. A lifting element (3) provided with a second leading edge (16) and a second trailing edge (2), and moreover comprising at least one flap (1) which is mounted in rotary manner at the said second trailing edge (2), leaving a clearance (13) between the said second trailing edge (2) and the said first leading edge (7) of the flap (1),
**characterised in that** the said flap (1) is of the type specified in one of Claims 1 to 11.

13. A lifting element according to Claim 12,
**characterised in that** the said clearance (13) is between 1.5% and 3.5% of the said chord (CO) of the flap (1).

14. A lifting element according to Claim 13,
**characterised in that** the said clearance (13) corresponds substantially to 2% of the said chord (CO) of the flap (1).

15. A lifting element according to Claim 12,
**characterised in that** the said clearance (13) is between 0.4% and 0.8% of a total length (L) separating the said second leading edge (16) from the said first trailing edge (8).

16. A lifting element according to Claim 15,
**characterised in that** the said clearance (13) corresponds substantially to 0.5% of the said total length (L).

17. A lifting element according to any one of Claims 12 to 16,
**characterised in that** it has a partial overlap (P) of the said first leading edge (7) by the said second trailing edge (2).

18. A lifting element according to Claim 17,
**characterised in that** the said partial overlap (P) is by less than 10% of the said chord (CO) of the flap (1).

19. A lifting element according to any one of Claims 12 to 18,
**characterised in that** it has at least one filling means (14) for sealing up the opening created by the said clearance (13).

20. A lifting element according to Claim 19,
**characterised in that** the said filling means (14) is located on a reference surface (11) of the lifting element (3).

21. A lifting element according to any one of Claims 12 to 20,
**characterised in that** it comprises a plurality of flaps (1) which are arranged over the second span of the said lifting element (3), and **in that** the said first span (5) of each of the said flaps (1) is less than or equal to 15% of the said second span.

22. A lifting element according to Claim 21,
**characterised in that** the said first span (5) of each of the said flaps (1) is between 7% and 10% of the said second span of the said lifting element (3).

## Patentansprüche

1. Drehklappe, die in der Lage ist, um eine gemäß der ersten Spannweite (5) der Klappe (1) definierte Längsdrehachse (4) zu drehen, wobei die Klappe (1) ein Profil (6) aufweist, das entlang der Sehne (CO) verläuft und eine erste Vorderkante (7), eine erste Hinterkante (8), eine Unterseite (9) und eine Oberseite (10) aufweist, wobei die Drehachse (4) sich in einem ersten Abstand (C1) zur ersten Vorderkante (7) befindet, der zwischen 15 % und 35 % der Sehne (CO) der Klappe liegt,
**dadurch gekennzeichnet, dass**:
- die Unterseite (9) und die Oberseite (10) jenseits von 25 % der Sehne (CO) der Klappe (1) nicht-konkave Formen aufweisen;
- die erste Hinterkante (8) einen Hauptwinkel (α) aufweist, der zwischen 10°und 30° liegt.

2. Klappe nach Anspruch 1, **dadurch gekennzeichnet, dass** die erste Vorderkante (7) eine abgerundete Form aufweist, die mit einem im Wesentlichen konstanten Krümmungsradius (R) versehen ist.

3. Klappe nach Anspruch 1, **dadurch gekennzeichnet, dass** die erste Vorderkante (7) eine elliptische Form aufweist, deren erstes Verhältnis der großen Achse zur kleinen Achse kleiner als oder gleich 1,5 ist.

4. Klappe nach einem der Ansprüche 1 bis 3, **dadurch gekennzeichnet, dass** die Unterseite (9) eine im Wesentlichen lineare Form aufweist.

5. Klappe nach einem der Ansprüche 1 bis 3, **dadurch gekennzeichnet, dass** die Unterseite (9) eine im Wesentlichen konvexe Form aufweist.

6. Klappe nach einem der Ansprüche 1 bis 5, **dadurch gekennzeichnet, dass** die Oberseite (10) eine im Wesentlichen lineare Form aufweist.

7. Klappe nach einem der Ansprüche 1 bis 5, **dadurch gekennzeichnet, dass** die Oberseite (10) eine im Wesentlichen konvexe Form aufweist.

8. Klappe nach einem der vorhergehenden Ansprüche, **dadurch gekennzeichnet, dass** der Hauptwinkel (α) im Wesentlichen 20° beträgt.

9. Klappe nach einem der vorhergehenden Ansprüche, **dadurch gekennzeichnet, dass** die erste Hinterkante (8) eine elliptische Form aufweist, deren zweites Verhältnis der großen Achse zur kleinen Achse größer als oder gleich 1,5 ist.

10. Klappe nach Anspruch 9, **dadurch gekennzeichnet, dass** das zweite Verhältnis der großen Achse zur kleinen Achse im Wesentlichen gleich 2 ist.

11. Klappe nach einem der vorhergehenden Ansprüche, **dadurch gekennzeichnet, dass** die Drehachse (4) der Klappe (1) sich in einem ersten Abstand (C1) von der ersten Vorderkante (7) befindet, der im Wesentlichen 25,5 % der Sehne (CO) entspricht.

12. Auftriebelement (3), das mit einer zweiten Vorderkante (16) sowie mit einer zweiten Hinterkante (2) versehen ist und zusätzlich mindestens eine Klappe (1) aufweist, die in Höhe der zweiten Hinterkante (2) drehbar montiert ist, indem sie ein Spiel (13) zwischen der zweiten Hinterkante (2) und der ersten Vorderkante (7) der Klappe (1) lässt, **dadurch gekennzeichnet, dass** die Klappe (1) von dem Typ ist, wie er in einem der Ansprüche 1 bis 11 definiert ist.

13. Auftriebelement nach Anspruch 12, **dadurch gekennzeichnet, dass** das Spiel (13) zwischen 1,5 % und 3,5 % der Sehne (CO) der Klappe (1) liegt.

14. Auftriebelement nach Anspruch 13, **dadurch gekennzeichnet, dass** das Spiel (13) im Wesentlichen 2 % der Sehne (CO) der Klappe (1) entspricht.

15. Auftriebelement nach Anspruch 12, **dadurch gekennzeichnet, dass** das Spiel (13) zwischen 0,4 % und 0,8 % einer Gesamtlänge (L) liegt, die die zweite Vorderkante (16) von der ersten Hinterkante (8) trennt.

16. Auftriebelement nach Anspruch 15, **dadurch gekennzeichnet, dass** das Spiel (13) im Wesentlichen 0,5 % der Gesamtlänge (L) entspricht.

17. Auftriebelement nach einem der Ansprüche 12 bis 16, **dadurch gekennzeichnet, dass** es eine teilweise Überdeckung (P) der ersten Vorderkante (7) durch die zweite Hinterkante (2) aufweist.

18. Auftriebelement nach Anspruch 17, **dadurch gekennzeichnet, dass** die teilweise Überdeckung (P) geringer ist als 10 % der Sehne (CO) der Klappe (1).

19. Auftriebelement nach einem der Ansprüche 12 bis 18, **dadurch gekennzeichnet, dass** es mindestens ein Abdichtmittel (14) aufweist, um die von dem Spiel (13) erzeugte Öffnung zu verschließen.

20. Auftriebelement nach Anspruch 19, **dadurch gekennzeichnet, dass** das Abdichtmittel (14) sich in einer Bezugsfläche (11) des Auftriebelements (3) befindet.

21. Auftriebelement nach einem der Ansprüche 12 bis 20, **dadurch gekennzeichnet, dass** es mehrere Klappen (1) aufweist, die gemäß der zweiten Spannweite des Auftriebelements (3) angeordnet sind, und dass die erste Spannweite (5) jeder der Klappen (1) kleiner als oder gleich 15 % der zweiten Spannweite ist.

22. Auftriebelement nach Anspruch 21, **dadurch gekennzeichnet, dass** die erste Spannweite (5) jeder der Klappen (1) zwischen 7 % und 10 % der zweiten Spannweite des Auftriebelements (3) liegt.
